# EUROPEAN PATENT SPECIFICATION

(11) **EP 4 552 961 B1**
(45) Date of publication and mention of the grant of the patent: **16.09.2026**
(21) Application number: 23849217.7
(22) Date of filing: 20.07.2023
(51) Int. Cl.: B62K 9/02, B62K 15/00

(54) **TRICYCLE**
DREIRAD
TRICYCLE

(30) Priority: 04.08.2022 CN 202210931522
(43) Date of publication of application: 14.05.2025
(73) Proprietor: Dahon Tech (Shenzhen) Co., Ltd., Shenzhen, Guangdong 518105 (CN)
(72) Inventor: OU, Huasong, Shenzhen, Guangdong 518105 (CN); HON, David Tak Wei, Shenzhen, Guangdong 518105 (CN); MO, Yiping, Shenzhen, Guangdong 518105 (CN); ZHENG, Hanxin, Shenzhen, Guangdong 518105 (CN)
(74) Representative: Reddie & Grose LLP
(86) International application number: PCT/CN2023/108375
(87) International publication number: WO 2024/027509

(56) References cited:
- CN-A- 108 382 516
- CN-A- 113 286 740
- CN-A- 115 402 453
- CN-U- 201 932 310
- CN-U- 202 593 735
- CN-U- 202 593 735
- CN-U- 214 451 575
- CN-U- 214 451 575
- CN-Y- 2 273 679
- NL-B1- 2 022 079
- US-A- 1 540 271
- US-A1- 2021 016 853
- US-A1- 2021 016 853

## Description

### TECHNICAL FIELD

The present application relates to the technical field of bicycles, in particular to a tricycle.

### BACKGROUND

Bicycles are powered by stepping on pedals and are green and environmentally friendly means of transportation. The bicycles generally include two-wheeled bicycles and tricycles. The tricycles can be used to be loaded with goods and people, and have been widely used in daily life.

However, since the tricycle is relatively large in size, it needs to take up a large space when not in use, causing inconvenience to storage. NL 2022079 B1 relates to a cargo bike comprising a collapsible frame, the collapsible frame being adjustable between an elongate state in which the collapsible frame positions a front and rear wheel of the cargo bike at a first distance along a longitudinal axis of the cargo bike, and a collapsed state in which the collapsible frame positions the front and rear wheel at a second, smaller distance along the longitudinal axis of the cargo bike, a cargo holder for holding cargo that comprises a face that extends substantially transversely to the longitudinal axis, and wherein in the collapsed state of the collapsible frame at least one of the wheels extends transversely to the longitudinal axis of the cargo bike and at least partially overlaps with the transversely extending face.

### SUMMARY

Accordingly, it is necessary to provide a tricycle that is conveniently stored to address a problem of inconvenient storage of conventional tricycles.

A tricycle includes:
a frame including a first frame body and a second frame body connected to each other;
a folder connecting the first frame body to the second frame body, the first frame body and the second frame body being capable of being folded or unfolded by the folder;
two first wheels disposed on the first frame body;
a second wheel disposed on the second frame body; and
a universal wheel assembly disposed on the frame and being movable relative to the frame to switch between a first position and a second position, the universal wheel assembly including a universal wheel. When the universal wheel assembly is in the first position, the two first wheels and the second wheel form a first supporting plane for supporting the tricycle. When the universal wheel assembly is in the second position, the two first wheels and the universal wheel form a second supporting plane for supporting the tricycle.

In an embodiment, the first frame body includes a first main beam and a first fork hinged to the first main beam. The first wheels are connected to the first fork. The tricycle further includes a carriage mounted on the first fork. The second frame body includes a second main beam and a second fork connected to each other. The second wheel is connected to the second fork. The folder connects the first main beam to the second main beam.

In an embodiment, the first frame body further includes a first tube connected to the first main beam. The tricycle further includes a handle rotatably disposed on the first tube.

In an embodiment, the tricycle further includes a quick-release mechanism connected to the first tube and capable of switching between a first state and a second state relative to the first tube. When the quick-release mechanism is in the first state, the quick-release mechanism allows the handle to move relative to the first tube. When the quick-release mechanism is in the second state, the quick-release mechanism restricts the handle from moving relative to the first tube.

In an embodiment, the second frame body further includes: a second tube connected to the second main beam and the second fork; a connecting tube connected to the second main beam and the second tube; and a connecting portion connected to the connecting tube. The universal wheel assembly is hinged to the connecting portion. The tricycle further includes a seat mounted on the second tube.

In an embodiment, when the tricycle in a folded state, an acute angle is formed between the first main beam and the second main beam, and an extending direction of the first main beam is inclined relative to extending directions of axes of the first wheels.

In an embodiment, the tricycle further inccludes a carriage mounted on the first frame body. When the tricycle is in an unfolded state, a lowest point of the carriage is lower than an axle center of the first wheel.

In an embodiment, the tricycle further includes a carriage mounted on the first frame body. The carriage is removably connected to the first frame body. When the tricycle is in a folded state, other remaining components of the tricycle are capable of being accommodated in the carriage.

The tricycle further includes a pin shaft connected to the first frame body or second frame body. The universal wheel assembly is hinged to the first frame body or the second frame body through the pin shaft. The universal wheel assembly further includes a connecting shaft, a shaft sleeve, and an elastic member. An end of the connecting shaft is connected to the pin shaft, and a bracket of the universal wheel is rotatably disposed on the other end of the connecting shaft. A limit protrusion is disposed on and protruded from an outer surface of the connecting shaft. The elastic member and the shaft sleeve are sleeved on an outside of the connecting shaft. The elastic member is compressed between the shaft sleeve and the limit protrusion. When the universal wheel assembly is in the first position and the second position, the shaft sleeve abuts against the second frame body to play a role in position-limiting.

In an embodiment, the second frame is provided with a first limiting surface and a second limiting surface. When the universal wheel assembly is in the first position, an end surface of the shaft sleeve away from the elastic member abuts against the first limiting surface, to limit a switching of the universal wheel assembly from the first position to the second position. When the universal wheel assembly is in the second position, the end surface of the shaft sleeve away from the elastic member abuts against the second limiting surface, to limit a switching of the universal wheel assembly from the second position to the first position.

In an embodiment, the first frame body includes a first main beam and a first fork hinged to the first main beam. The first wheels are connected to the first fork. The second frame body includes a second main beam and a second fork connected to each other. The second wheel is connected to the second fork. The folder connects the first main beam to the second main beam.

In an embodiment, the folder includes: a first joint connected to the first main beam; a second joint hinged to the first joint and connected to the second main beam; and a hand shank hinged to the first joint or the second joint.

In an embodiment, when the tricycle is in a folded state, an extending direction of the second main beam is substantially parallel to extending directions of axes of the first wheels.

In an embodiment, the first frame body further includes: a first tube connected to the first main beam; and a slanting tube slantingly supported between the first main beam and the first tube.

In an embodiment, the second frame body further includes a second tube connected to the second main beam. The tricycle further includes a motor system mounted in a mounting space formed by the second tube and the second main beam.

### BRIEF DESCRIPTION OF THE DRAWINGS

In order to more clearly illustrate the technical solutions in the embodiments of the present application or the conventional technology, accompanying drawings that need to be used in the description of the embodiments or the conventional technology are briefly introduced below. Obviously, the accompanying drawings in the following description only illustrate the embodiments of the present application, those skilled in the art can also conceive other drawings based on the disclosed drawings without creative effort.
FIG. 1 is an axonometric view of a tricycle in an unfolded state according to an embodiment of the present application.
FIG. 2 is a side view of the tricycle shown in FIG. 1.
FIG. 3 is a front view of the tricycle shown in FIG. 1.
FIG. 4 is an axonometric view of the tricycle shown in FIG. 1 in a folded state.
FIG. 5 is another axonometric view of the tricycle shown in FIG. 4.
FIG. 6 is a top view of the tricycle shown in FIG. 4.
FIG. 7 is a perspective view showing the tricycle shown in FIG. 1 with components thereof mounted therein.
FIG. 8 is another axonometric view of the tricycle shown in FIG. 4.
FIG. 9 is yet another axonometric view of the tricycle shown in FIG. 4.
FIG. 10 is an axonometric view of a tricycle in an unfolded state according to another embodiment of the present application.
FIG. 11 is another isometric view of the tricycle shown in FIG. 10.
FIG. 12 is an enlarged view of a portion A of the tricycle shown in FIG. 10.
FIG. 13 is an enlarged view of a portion B of the tricycle shown in FIG. 11.

Illustration for reference signs:
100. Tricycle; 10. Frame; 11. First frame body; 111. First main beam; 112. First fork; 113. First tube; 114. Slanting tube; 12. Second frame body; 121, Second main beam; 122, Second fork; 123, Second tube; 124, Connecting tube; 125, Connecting portion; 1251, First limiting surface; 1252, Second limiting surface; 20, First wheel; 30, Second wheel; 40, Carriage; 50, Handle; 51, Sleeve; 52, Handle body; 60, Seat; 70, Folder; 71, First joint; 72, Second joint ;73, Hand shank; 80, Universal wheel assembly; 81, Universal wheel; 82, Connecting shaft; 821, Limit protrusion; 83, Shaft sleeve; 84, Elastic member; 90, Pin shaft; 120. Motor system.

### DETAILED DESCRIPTION OF THE EMBODIMENTS

The technical solutions in the embodiments of the present application are described clearly and completely below with reference to the attached drawings in the embodiments of the present application. Apparently, the described embodiments are only some of the embodiments of the present application, not all of them. Based on the embodiments in present application, all other embodiments obtained by persons of ordinary skill in the art without making creative efforts belong to the scope of protection of present application.

In the description of the present application, it should be understood that terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential" and other indicated orientations or positional relationships are based on the orientations or positional relationships shown in the drawings, and are only for the convenience of describing the present application and simplifying the description, rather than indicating or implying the indicated device or elements must have certain orientations, be constructed and operate in certain orientations, and thus should not be construed as limiting the present application.

In addition, terms "first" and "second" are used for descriptive purposes only, and cannot be interpreted as indicating or implying relative importance or implicitly specifying the quantity of indicated technical features. Thus, the features defined by "first" and "second" may explicitly or implicitly include at least one of these features. In the description of the present application, "plurality" means at least two, such as two, three, etc., unless otherwise specifically defined.

In this application, unless otherwise clearly specified and defined, terms such as "mounting", "coupling", "connecting" and "fixing" should be interpreted in a broad sense, for example, it may be a fixed connection or a detachable connection, or integrated formed; or it may be a mechanical connection or an electrical connection; or, it may be a direct connection or an indirect connection through an intermediate medium; or it may be a communication between two components or the interaction relationship between two components, unless otherwise specified defined. For those of ordinary skill in the art, the specific meanings of the above terms in the present application can be understood according to specific situations.

In the present application, unless otherwise clearly specified and defined, a first feature being "on" or "under" a second feature may mean that the first feature and the second feature are in a direct contact, or that the first feature and the second feature are in an indirect contact through an intermediate medium. Moreover, a first feature being "above", "over" and "on the top of" a second feature may mean that the first feature is directly above or obliquely above the second feature, or simply means that the first feature is higher in level than the second feature. A first feature being "below", "beneath" and "under" the second feature may mean that the first feature is directly below or obliquely below the second feature, or simply means that the first feature is lower in level than the second feature.

It should be noted that when an element is referred to as being "fixed on" or "disposed on" another element, it may be directly on the other element or there may be an intermediate element. When an element is referred to as being "connected to" another element, it can be directly connected to the other element or an intermediate element may also be present. As used herein, the terms "vertical", "horizontal", "upper", "lower", "left", "right" and similar expressions are for the purpose of illustration only and are not intended to represent the only embodiments.

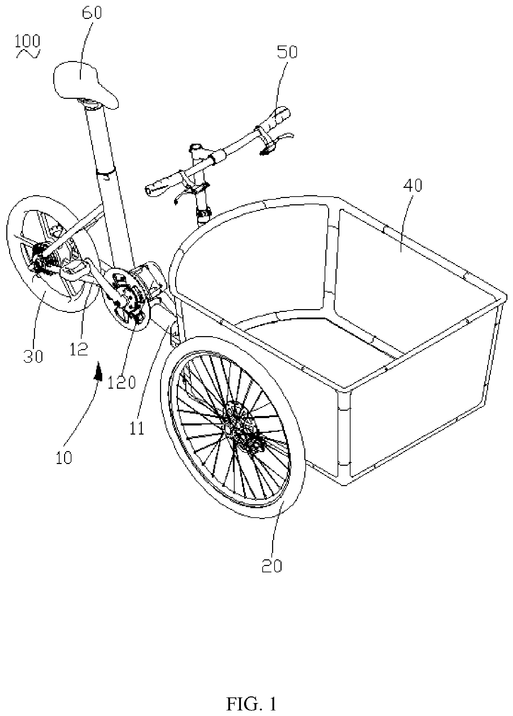

Referring to FIG. 1, an embodiment of the present application provides a tricycle 100, including a frame 10, two first wheels 20, and a second wheel 30. The first wheels 20 and the second wheel 30 are mounted on the frame 10. Specifically, the two first wheels 20 are disposed coaxially. In a traveling direction of the tricycle 100, the second wheel 30 is positioned on the same side of the two first wheels 20.

In a specific embodiment, the two first wheels 20 are used as front wheels of the tricycle 100, and the second wheel 30 are used as a rear wheel of the tricycle 100. That is, when the tricycle 100 is traveling, the second wheel 30 is behind the first wheels 20. In another specific embodiment, the two first wheels 20 are used as the rear wheels of the tricycle 100, and the second wheel 30 are used as the front wheel of the tricycle 100. That is, when the tricycle 100 is traveling, the second wheel 30 is in the front of the first wheels 20.

The frame 10 includes a first frame body 11 and a second frame body 12 connected to each other. The first wheels 20 are mounted on the first frame body 11, and the second wheel 30 is mounted on the second frame body 12.

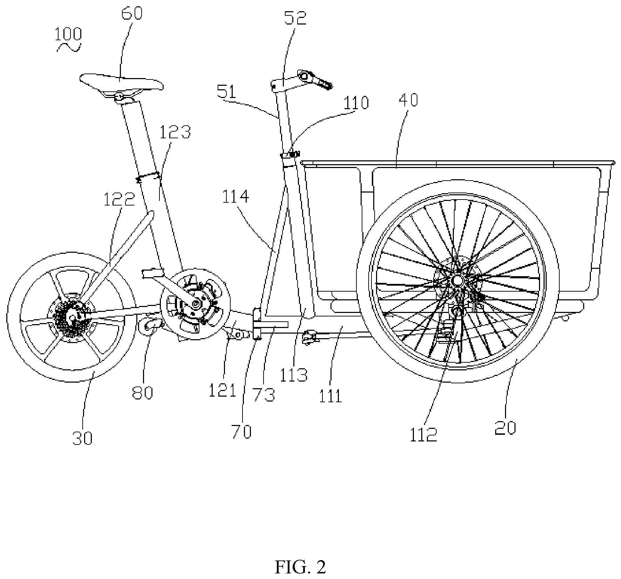

Referring to FIG. 2, the first frame body 11 includes a first main beam 111 and a first fork 112. The first fork 112 is hinged to the first main beam 111. The first wheels 20 are connected to the first fork 112. The second frame body 12 includes a second main beam 121 and a second fork 122 connected to each other. The second main beam 121 is connected to the first main beam 111, and the second wheel 30 is connected to the second fork 122. In this way, since the first fork 112 is hinged to the first main beam 111, when the tricycle 100 moves, the first fork 112 is rotatable relative to the first main beam 111, so that the first wheels 20 is rotatable relative to the second wheel 30, which facilitates the turning of the tricycle 100.

The tricycle 100 further includes a carriage 40. The carriage 40 is mounted on the first fork 112, so that the carriage 40 can be loaded with goods and people. When the tricycle is in an unfolded state, the lowest point of the carriage 40 is lower than an axle center of the first wheel 20. In this way, the center of gravity of the entire tricycle 100 is lower, which can improve the stability of the tricycle 100.

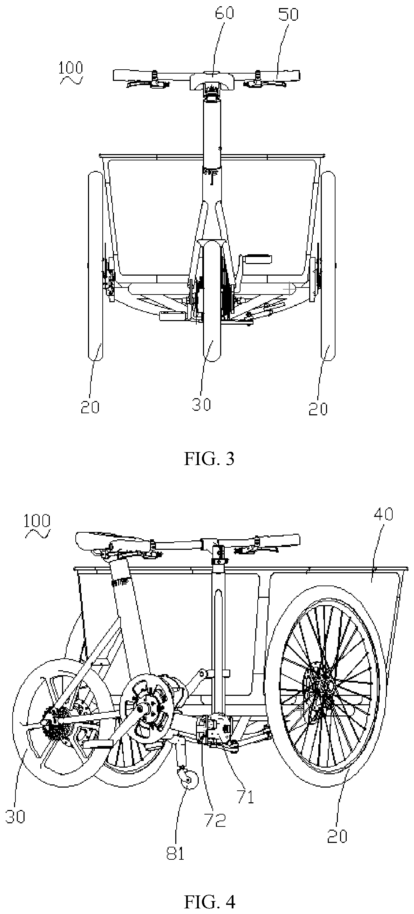

In an embodiment, the first frame body 11 further includes a first tube 113 connected to the first main beam 111. Referring to FIGS. 2 and 3, the tricycle 100 further includes a handle 50 mounted on the first tube 113. The second frame body 12 further includes a second tube 123. The tricycle 100 further includes a seat 60. The seat 60 is mounted on the second tube 123. In this way, since the handle 50 is mounted on the first frame body 11, and the seat 60 is mounted on the second frame body 12, a rider sits on the seat 60 and holds the handle 50 to ride the tricycle 100. In addition, the first wheels 20 are mounted on the first frame body 11, the second wheel 30 is mounted on the second frame body 12, and in this case, the second wheel 30 is used as the rear wheel of the tricycle 100.

The first frame body 11 further includes a slanting tube 114. The slanting tube 114 is slantingly supported between the first main beam 111 and the first tube 113 to improve the strength of the first frame body 11. Specifically, the slanting tube 114 is disposed on a side of the first tube 113 adjacent to the second frame body 12.

In an embodiment, the tricycle 100 further includes a folder 70. The folder 70 connects the first frame body 11 to the second frame body 12, and specifically, the folder 70 connects the first main beam 111 to the second main beam 121, and the first frame body 11 and the second frame body 12 are folded or unfolded by the folder 70. In this way, when the tricycle 100 is in use, the first frame body 11 and the second frame body 12 are unfolded by the folder 70, so that the tricycle 100 is in the unfolded state, which facilitates the normal use of the tricycle 100. When the tricycle 100 is not in use and needs to be stored, the first frame body 11 and the second frame body 12 are folded by the folder 70, so that the tricycle 100 is in a folded state, which facilitates the storage of the tricycle 100.

Referring to FIGS. 2 and 4, the folder 70 includes a first joint 71, a second joint 72, and a hand shank 73. The first joint 71 is connected to the first main beam 111, and the second joint 72 is connected to the second main beam 121. The first joint 71 is hinged to the second joint 72, and the hand shank 73 is hinged to the first joint 71 or the second joint 72. The folder 70 has a closed state and an opened state. When the folder 70 is in the closed state, the first joint 71 and the second joint 72 approaches each other, and the hand shank 73 locks the first joint 71 and the second joint 72. In this case, the first frame body 11 and the second frame body 12 can be unfolded. When the folder 70 is in the opened state, the hand shank 73 unlocks the first joint 71 and the second joint 72, and the first joint 71 moves away from the second joint 72. In this case, the first frame body 11 and the second frame body 12 can be folded.

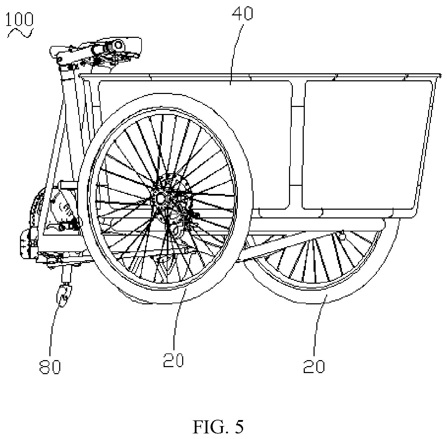

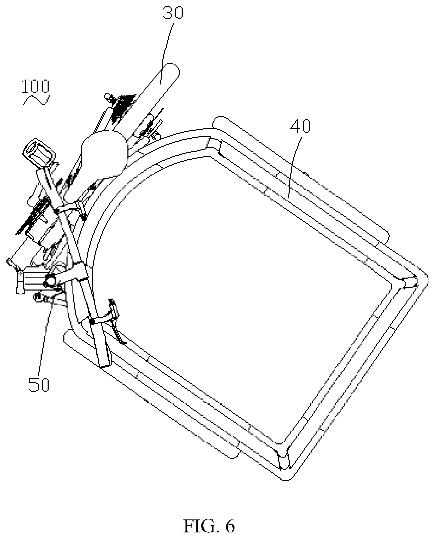

Further, when the tricycle 100 is in the unfolded state, the second main beam 121 is disposed at an end of the first main beam 111 in an extending direction of the first main beam 111. Referring to FIGS. 5 and 6, when the tricycle 100 is in the folded state, an acute angle is formed between the first main beam 111 and the second main beam 121, and the extending direction of the first main beam 111 is inclined relative to extending directions of axes of the first wheels 20. In this way, the volume of the tricycle 100 is reduced, which in turn, reduces the space occupied by the tricycle 100, and facilitates the storage of the tricycle 100.

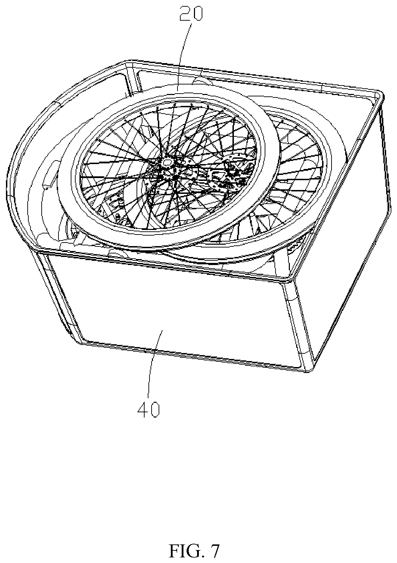

Further, referring to FIG. 7, the carriage 40 is removably connected to the first frame body 11, and other components of the tricycle 100 can be accommodated in the carriage 40 when the tricycle 100 is in the folded state. In this way, the storage of the tricycle 100 can be facilitated.

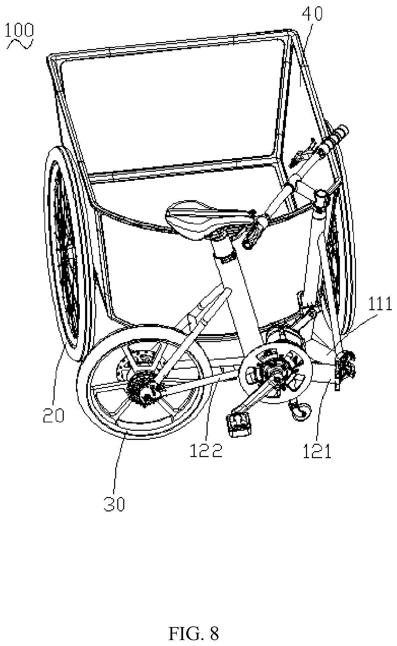

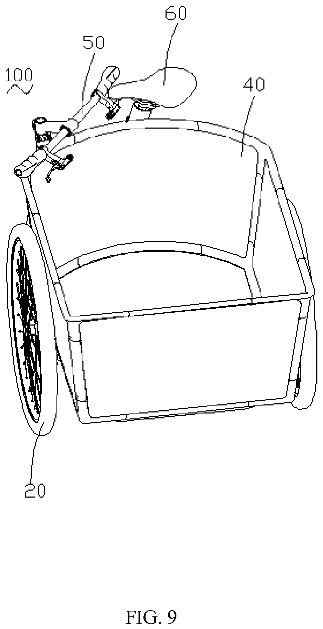

In a specific embodiment, referring to FIGS. 8 and 9, when the tricycle 100 is in the folded state, the extending direction of the second main beam 121 is substantially parallel to the extending directions of the axes of the first wheels 20.

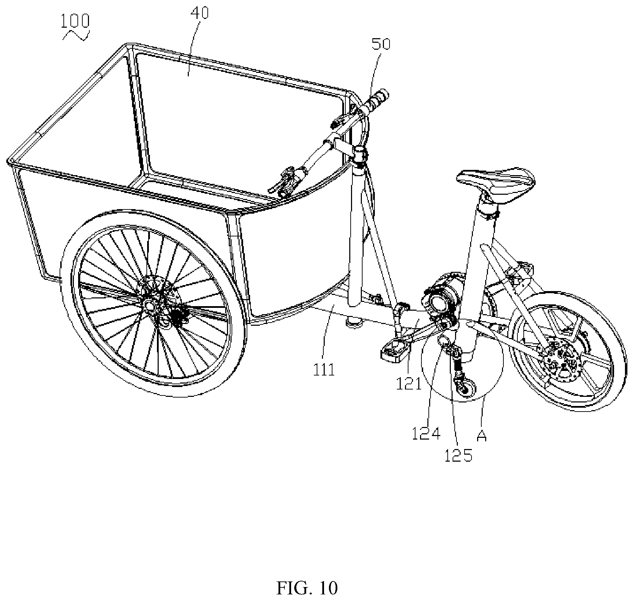

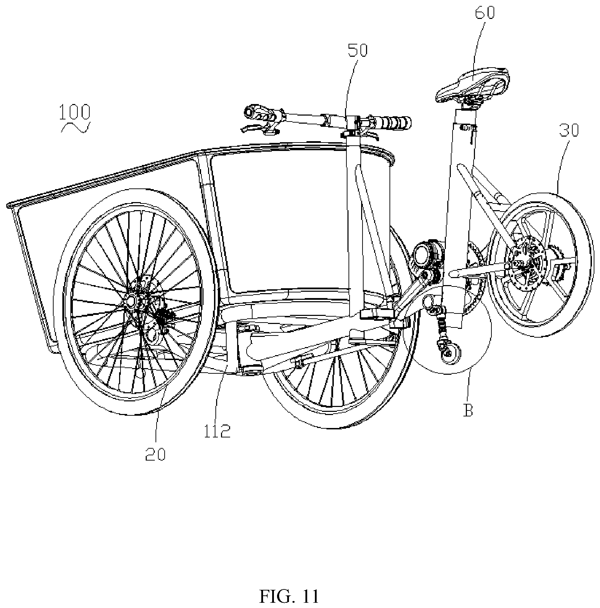

Referring to FIG. 2, the tricycle 100 further includes a universal wheel assembly 80 disposed on the first frame body 11 or the second frame body 12. The universal wheel assembly 80 is moveable relative to the vehicle frame 10 to switch between a first position and a second position. When the universal wheel assembly 80 is in the first position (see FIG. 2), the two first wheels 20 and the second wheel 30 form a first supporting plane for supporting the tricycle 100. That is, when the tricycle 100 is placed on the ground, the universal wheel assembly 80 does not raise up the first wheels 20 and the second wheel 30. When the universal wheel assembly 80 is in the second position (see FIGS. 10 and 11), the two first wheels 20 and a universal wheel 81 of the universal wheel assembly 80 form a second supporting plane for supporting the tricycle 100. That is, when the tricycle 100 is placed on the ground, the universal wheel assembly 80 can raise up the second wheel 30.

With the above configuration, when the universal wheel assembly 80 is in the first position, the two first wheels 20 and the second wheel 30 form the first supporting plane supported on the ground, and in this case, the universal wheel assembly 80 is not in contact with the ground, which does not interfere with the normal traveling of the tricycle 100. When the universal wheel assembly 80 is in the second position, the two first wheels 20 and the universal wheel 81 forms the second supporting plane supported on the ground, and in this case, the second wheel 30 is raised up by the universal wheel 81, which is relatively labor-saving when folding or unfolding the tricycle 100. In addition, when the tricycle 100 is in the folded state, since the universal wheel 81 is moveable by 360° in all directions, the tricycle 100 can also be moved by means of the universal wheel 81, so that the tricycle 100 can be moved in the folded state.

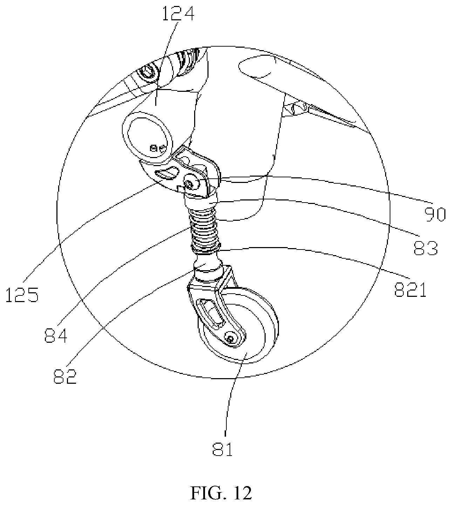

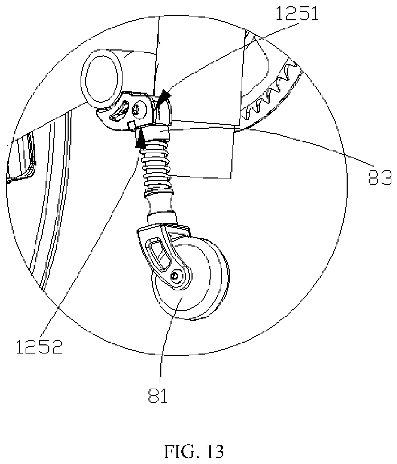

Referring to FIGS. 12 and 13, the second frame body 12 further includes a connecting tube 124 and a connecting portion 125. The connecting tube 124 is connected to the second main beam 121 and the second tube 123. The connecting portion 125 is connected to the connecting tube 124. The universal wheel assembly 80 is hinged to the connecting portion 125. The connecting tube 124 is connected to both the second main beam 121 and the second tube 123, so that the connection strength between the universal wheel assembly 80 and the second frame body 12 can be improved.

It is conceivable that, in some other embodiments, the connecting tube 124 may only be connected to the second main beam 121 or the second tube 123.

The tricycle 100 further includes a pin shaft 90. The pin shaft 90 is connected to the first frame body 11 or second frame body 12. Specifically, the pin shaft 90 is connected to the connecting portion 125 of the second frame body 12. Specifically, the pin shaft 90 extends through the connecting portion 125. The universal wheel assembly 80 is hinged to the first frame body 11 or the second frame body 12 through the pin shaft 90. Specifically, the universal wheel assembly 80 further includes a connecting shaft 82. The universal wheel 81 is connected to an end of the connecting shaft 82, and the pin shaft 90 extends through the other end of the connecting shaft 82.

The universal wheel assembly 80 further includes a shaft sleeve 83 and an elastic member 84. A limit protrusion 821 is disposed on and protruded from an outer surface of the connecting shaft 82. The elastic member 84 and the shaft sleeve 83 are both sleeved on the outside of the connecting shaft 82. The elastic member 84 is compressed between the shaft sleeve 83 and the limit protrusion 821. When the universal wheel assembly 80 is in the first position or the second position, the shaft sleeve 83 abuts against the connecting portion 125 to play a role in position-limiting.

With the above configuration, when the universal wheel 81 is in the first position or the second position, under the action of the elastic member 84, the shaft sleeve 83 abuts against the connecting portion 125, thus the switching of the universal wheel assembly 80 from the first position to the second position under the action of gravity is limited, and the switching of the universal wheel assembly 80 from the second position to the first position during the process of folding or unfolding the tricycle 100 is limited.

In an embodiment, the elastic member 84 is a spring. Certainly, in some other embodiments, the type of the elastic member 84 is not limited.

Further, the connecting portion 125 includes a first limiting surface 1251 and a second limiting surface 1252. When the universal wheel assembly 80 is in the first position, an end surface of the shaft sleeve 83 away from the elastic member 84 abuts against the first limiting surface 1251, to limit the switching of the universal wheel assembly 80 from the first position to the second position. When the universal wheel assembly 80 is in the second position, the end surface of the shaft sleeve 83 away from the elastic member 84 abuts against the second limiting surface 1252, to limit the switching of the universal wheel assembly 80 from the second position to the first position. In this way, the position-limiting effect is enhanced through the abutment between surfaces.

In an embodiment, the handle 50 is rotatably disposed on the first tube 113, so that when the tricycle 100 is folded, the handle 50 can be rotated to a suitable position, so as to further reduce the space occupied by the tricycle 100 when folded.

Further, referring to FIG. 2, the tricycle 100 further includes a quick-release mechanism 110. The quick-release mechanism 110 is connected to the first tube 113 and can be switched between a first state and a second state relative to the first tube 113. When the quick-release mechanism 110 is in the first state, the quick-release mechanism 110 allows the handle 50 to move relative to the first tube 113. When the quick-release mechanism 110 is in the second state, the quick-release mechanism 110 restricts the handle 50 from moving relative to the first tube 113. The quick-release mechanism 110 is configured to lock the handle 50 when riding, thereby realizing safe riding. When the tricycle 100 needs to switch between the folded state and the unfolded state, the quick-release mechanism 110 is in the first state, so that the handle 50 is moveable relative to the first tube 113.

The handle 50 includes a sleeve 51 and a handle body 52 connected to each other. The sleeve 51 is connected to and sleeved with the first tube 113. When the quick-release mechanism 110 is in the first state, the quick-release mechanism 110 allows the sleeve 51 to move relative to the first tube 113. When the quick-release mechanism 110 is in the second state, the quick-release mechanism 110 restricts the movement of the sleeve 51 relative to the first tube 113. Specifically, when the quick-release mechanism 110 is in the first state, the quick-release mechanism 110 allows the sleeve 51 to rotate and move axially relative to the first tube 113; and when the quick-release mechanism 110 is in the second state, the quick-release mechanism 110 restricts the rotation and axial movement of the first tube 113.

In an embodiment, the tricycle 100 further includes a motor system 120. The motor system 120 is mounted in a mounting space formed by the second tube 123 and the second main beam 121, so that the integration of manpower riding and motor-assisted driving can be realized.

The working principle of the tricycle 100 according to the embodiments of the present application is as follows.

When switching from the unfolded state to the folded state, the universal wheel assembly 80 is operated to switch from the first position to the second position, so that the universal wheel assembly 80 raises up the second wheel 30, and the first wheel 20 and the universal wheel 81 form the second supporting plane. The hand shank 73 is operated to unlock the first joint 71 and the second j oint 72. With the assistance of the universal wheel 81, the first frame body 11 and the second frame body 12 are folded. The carriage 40 is operated to drive the second fork 122 to rotate relative to the first main beam 111, such that the second main beam 121 is substantially parallel to the axis of the first wheel 20. The quick-release mechanism 110 is operated to allow the handle 50 to rotate and move axially relative to the first tube 113, so that the handle 50 is rotated to a proper angle, and the sleeve 51 is retracted into the first tube 113.

When switching from the folded state to the unfolded state, the quick-release mechanism 110 is operated to allow the handle 50 to rotate and move axially relative to the first tube 113. The handle 50 is reset, and the sleeve 51 extends out of the first tube 113. The carriage 40 is operated to drive the second fork 122 to rotate and reset relative to the first main beam 111. The universal wheel assembly 80 is still in the second position and raises up the second wheel 30. With the assistance of the universal wheel 81, the first frame body 11 and the second frame body 12 are unfolded. The hand shank 73 is operated to lock the first joint 71 and the second joint 72.

The technical features of the above-described embodiments can be combined arbitrarily. To simplify the description, not all possible combinations of the technical features in the above embodiments are described. However, all of the combinations of these technical features should be considered as being fallen within the scope of the present application, as long as such combinations do not contradict with each other.

The foregoing embodiments merely illustrate some embodiments of the present application, and descriptions thereof are relatively specific and detailed. However, it should not be understood as a limitation to the patent scope of the present application. It should be noted that, a person of ordinary skill in the art may further make some variants and improvements without departing from the concept of the present application, and the variants and improvements falls in the protection scope of the present application. Therefore, the protection scope of the present application shall be subject to the appended claims.

## Claims

1. A tricycle, comprising:
a frame (10) comprising a first frame body (11) and a second frame body (12) connected to each other;
a folder (70) connecting the first frame body (11) to the second frame body (12), the first frame body (11) and the second frame body (12) being capable of being folded or unfolded by the folder (70);
two first wheels (20) disposed on the first frame body (11);
a second wheel (30) disposed on the second frame body (12); and
a universal wheel assembly (80) disposed on the frame (10) and being movable to the frame to switch between a first position and a second position, the universal wheel assembly (80) comprising a universal wheel (81),
wherein when the universal wheel assembly (80) is in the first position, the two first wheels (20) and the second wheel (30) form a first supporting plane for supporting the tricycle;
when the universal wheel assembly (80) is in the second position, the two first wheels (20) and the universal wheel (81) form a second supporting plane for supporting the tricycle;
**characterized in that** the tricycle further comprises a pin shaft (90) connected to the second frame body (12);
wherein the universal wheel assembly (80) is hinged to the second frame body (12) through the pin shaft (90);
wherein the universal wheel assembly (80) further comprises a connecting shaft (82), a shaft sleeve (83), and an elastic member (84), and wherein an end of the connecting shaft (82) is connected to the pin shaft (90), and a bracket of the universal wheel (81) is rotatably disposed on the other end of the connecting shaft (82); and
wherein a limit protrusion (821) is disposed on and protruded from an outer surface of the connecting shaft (82); the elastic member (84) and the shaft sleeve (83) are sleeved on an outside of the connecting shaft (82); the elastic member (84) is compressed between the shaft sleeve (83) and the limit protrusion (821); when the universal wheel assembly (80) is in the first position and the second position, the shaft sleeve (83) abuts against the second frame body (12) to play a role in position-limiting.

2. The tricycle according to claim 1, wherein the first frame body (11) comprises a first main beam (111) and a first fork (112) hinged to the first main beam (111); and the first wheels (20) are connected to the first fork (112);
wherein the tricycle further comprises a carriage (40) mounted on the first fork (112);
wherein the second frame body (12) comprises a second main beam (121) and a second fork (122) connected to each other, the second wheel (30) is connected to the second fork (122); and
wherein the folder (70) connects the first main beam (111) to the second main beam (121).

3. The tricycle according to claim 2, wherein the first frame body (11) further includes a first tube (113) connected to the first main beam (111); and
the tricycle further comprises a handle (50) rotatably disposed on the first tube (113).

4. The tricycle according to claim 3, further comprising a quick-release mechanism (110) connected to the first tube (113) and capable of switching between a first state and a second state relative to the first tube (113);
when the quick-release mechanism (110) is in the first state, the quick-release mechanism (110) allows the handle (50) to move relative to the first tube (113); and
when the quick-release mechanism (110) is in the second state, the quick-release mechanism (110) restricts the handle (50) from moving relative to the first tube (113).

5. The tricycle according to claim 2, wherein the second frame body (12) further comprises:
a second tube (123) connected to the second main beam (121) and the second fork (122);
a connecting tube (124) connected to the second main beam (121) and the second tube (123); and
a connecting portion (125) connected to the connecting tube (124);
wherein the universal wheel assembly (80) is hinged to the connecting portion (125); and wherein the tricycle further comprises a seat (60) mounted on the second tube (123).

6. The tricycle according to claim 2, wherein when the tricycle in a folded state, an acute angle is formed between the first main beam (111) and the second main beam (121), and an extending direction of the first main beam (111) is inclined relative to extending directions of axes of the first wheels (20).

7. The tricycle according to claim 1, further comprising a carriage (40) mounted on the first frame body (11);
wherein when the tricycle is in an unfolded state, a lowest point of the carriage (40) is lower than an axle center of the first wheel (20).

8. The tricycle according to claim 1, further comprising a carriage (40) mounted on the first frame body (11);
wherein the carriage (40) is removably connected to the first frame body (11), when the tricycle is in a folded state, other remaining components of the tricycle are capable of being accommodated in the carriage (40).

9. The tricycle according to claim 1, wherein the second frame body (12) is provided with a first limiting surface (1251) and a second limiting surface (1252);
when the universal wheel assembly (80) is in the first position, an end surface of the shaft sleeve (83) away from the elastic member (84) abuts against the first limiting surface (1251), to limit a switching of the universal wheel assembly (80) from the first position to the second position; and
when the universal wheel assembly (80) is in the second position, the end surface of the shaft sleeve (83) away from the elastic member (84) abuts against the second limiting surface (1252), to limit a switching of the universal wheel assembly (80) from the second position to the first position.

10. The tricycle according to claim 1, wherein the first frame body (11) comprises a first main beam (111) and a first fork (112) hinged to the first main beam (111); and the first wheels (20) are connected to the first fork (112);
wherein the second frame body (12) comprises a second main beam (121) and a second fork (122) connected to each other, the second wheel (30) is connected to the second fork (122); and
wherein the folder (70) connects the first main beam (111) to the second main beam (121).

11. The tricycle according to claim 10, wherein the folder (70) comprises:
a first joint (71) connected to the first main beam (111);
a second joint (72) hinged to the first joint (71) and connected to the second main beam (121); and
a hand shank (73) hinged to the first joint (71) or the second joint (72).

12. The tricycle according to claim 10, wherein when the tricycle is in a folded state, an extending direction of the second main beam (121) is substantially parallel to extending directions of axes of the first wheels (20).

13. The tricycle according to claim 10, wherein the first frame body (11) further comprises:
a first tube (113) connected to the first main beam (111); and
a slanting tube (114) slantingly supported between the first main beam (111) and the first tube (113).

14. The tricycle according to claim 10, wherein the second frame body (12) further comprises a second tube (123) connected to the second main beam (121); and
the tricycle (100) further comprises a motor system (120) mounted in a mounting space formed by the second tube (123) and the second main beam (121).

## Patentansprüche

1. Dreirad, umfassend:
einen Rahmen (10), der einen ersten Rahmenkörper (11) und einen zweiten Rahmenkörper (12) umfasst, die miteinander verbunden sind;
einen Klappmechanismus (70), der den ersten Rahmenkörper (11) mit dem zweiten Rahmenkörper (12) verbindet, wobei der erste Rahmenkörper (11) und der zweite Rahmenkörper (12) imstande sind, vom Klappmechanismus (70) ein- oder ausgeklappt zu werden;
zwei erste Räder (20), die am ersten Rahmenkörper (11) angeordnet sind;
ein zweites Rad (30), das am zweiten Rahmenkörper (12) angeordnet ist; und
eine universelle Radanordnung (80), die am Rahmen (10) angeordnet ist und zum Rahmen beweglich ist, um zwischen einer ersten Position und einer zweiten Position zu wechseln, wobei die universelle Radanordnung (80) ein universelles Rad (81) umfasst,
wobei, wenn sich die universelle Radanordnung (80) in der ersten Position befindet, die beiden ersten Räder (20) und das zweite Rad (30) eine erste Stützebene zum Stützen des Dreirads bilden; wenn sich die universelle Radanordnung (80) in der zweiten Position befindet, die beiden ersten Räder (20) und das universelle Rad (81) eine zweite Stützebene zum Stützen des Dreirads bilden;
**dadurch gekennzeichnet, dass** das Dreirad weiter eine Stiftwelle (90) umfasst, die mit dem zweiten Rahmenkörper (12) verbunden ist;
wobei die universelle Radanordnung (80) durch die Stiftwelle (90) am zweiten Rahmenkörper (12) angelenkt ist;
wobei die universelle Radanordnung (80) weiter eine Verbindungswelle (82), eine Wellenhülse (83) und ein elastisches Element (84) umfasst, und wobei ein Ende der Verbindungswelle (82) mit der Stiftwelle (90) verbunden ist und eine Halterung des universellen Rades (81) drehbar am anderen Ende der Verbindungswelle (82) angeordnet ist; und
wobei ein Begrenzungsüberstand (821) an einer Außenoberfläche der Verbindungswelle (82) angeordnet ist und von dieser hervorsteht; das elastische Element (84) und die Wellenhülse (83) an einer Außenseite der Verbindungswelle (82) ummantelt sind; das elastische Element (84) zwischen der Wellenhülse (83) und dem Begrenzungsüberstand (821) zusammengedrückt ist; wenn sich die universelle Radanordnung (80) in der ersten und der zweiten Position befindet, die Wellenhülse (83) am zweiten Rahmenkörper (12) anschlägt, um eine Rolle bei der Positionsbegrenzung zu spielen.

2. Dreirad nach Anspruch 1, wobei der erste Rahmenkörper (11) einen ersten Hauptträger (111) und eine erste Gabel (112) umfasst, die am ersten Hauptträger (111) angelenkt ist; und die ersten Räder (20) mit der ersten Gabel (112) verbunden sind;
wobei das Dreirad weiter einen an der ersten Gabel (112) montierten Schlitten (40) umfasst;
wobei der zweite Rahmenkörper (12) einen zweiten Hauptträger (121) und eine zweite Gabel (122) umfasst, die miteinander verbunden sind, wobei das zweite Rad (30) mit der zweiten Gabel (122) verbunden ist; und
wobei der Klappmechanismus (70) den ersten Hauptträger (111) mit dem zweiten Hauptträger (121) verbindet.

3. Dreirad nach Anspruch 2, wobei der erste Rahmenkörper (11) weiter ein erstes Rohr (113) einschließt, das mit dem ersten Hauptträger (111) verbunden ist; und das Dreirad weiter einen Griff (50) umfasst, der drehbar am ersten Rohr (113) angeordnet ist.

4. Dreirad nach Anspruch 3, weiter umfassend einen Schnelllösemechanismus (110), der mit dem ersten Rohr (113) verbunden ist und zum Wechseln zwischen einem ersten Zustand und einem zweiten Zustand in Bezug zum ersten Rohr (113) imstande ist;
wenn sich der Schnelllösemechanismus (110) im ersten Zustand befindet, der Schnelllösemechanismus (110) es dem Griff (50) erlaubt, sich in Bezug zum ersten Rohr (113) zu bewegen; und
wenn sich der Schnelllösemechanismus (110) im zweiten Zustand befindet, der Schnelllösemechanismus (110) eine Bewegung des Griffs (50) in Bezug zum ersten Rohr (113) einschränkt.

5. Dreirad nach Anspruch 2, wobei der zweite Rahmenkörper (12) weiter Folgendes umfasst:
ein zweites Rohr (123), das mit dem zweiten Hauptträger (121) und der zweiten Gabel (122) verbunden ist;
ein Verbindungsrohr (124), das mit dem zweiten Hauptträger (121) und dem zweiten Rohr (123) verbunden ist; und
einen Verbindungsabschnitt (125), der mit dem Verbindungsrohr (124) verbunden ist;
wobei die universelle Radanordnung (80) am Verbindungsabschnitt (125) angelenkt ist; und
wobei das Dreirad weiter einen Sitz (60) umfasst, der am zweiten Rohr (123) montiert ist.

6. Dreirad nach Anspruch 2, wobei, wenn sich das Dreirad in einem eingeklappten Zustand befindet, ein spitzer Winkel zwischen dem ersten Hauptträger (111) und dem zweiten Hauptträger (121) gebildet wird und eine Erstreckungsrichtung des ersten Hauptträgers (111) in Bezug zu Erstreckungsrichtungen von Achsen der ersten Räder (20) geneigt ist.

7. Dreirad nach Anspruch 1, weiter umfassend einen Schlitten (40), der am ersten Rahmenkörper (11) montiert ist;
wobei, wenn sich das Dreirad in einem ausgeklappten Zustand befindet, ein tiefster Punkt des Schlittens (40) niedriger ist als eine Achsmitte des ersten Rads (20).

8. Dreirad nach Anspruch 1, weiter umfassend einen Schlitten (40), der am ersten Rahmenkörper (11) montiert ist;
wobei der Schlitten (40) abnehmbar mit dem ersten Rahmenkörper (11) verbunden ist, wenn sich das Dreirad in einem eingeklappten Zustand befindet, andere verbleibende Komponenten des Dreirads imstande sind, im Schlitten (40) untergebracht zu werden.

9. Dreirad nach Anspruch 1, wobei der zweite Rahmenkörper (12) mit einer ersten Begrenzungsoberfläche (1251) und einer zweiten Begrenzungsoberfläche (1252) bereitgestellt ist;
wenn sich die universelle Radanordnung (80) in der ersten Position befindet, eine Endoberfläche der Wellenhülse (83) von dem elastischen Element (84) weg an der ersten Begrenzungsoberfläche (1251) anschlägt, um ein Wechseln der universellen Radanordnung (80) von der ersten Position in die zweite Position zu begrenzen; und wenn sich die universelle Radanordnung (80) in der zweiten Position befindet, die Endfläche der Wellenhülse (83) vom elastischen Element (84) weg an der zweiten Begrenzungsoberfläche (1252) anschlägt, um ein Wechseln der universellen Radanordnung (80) von der zweiten Position in die erste Position zu begrenzen.

10. Dreirad nach Anspruch 1, wobei der erste Rahmenkörper (11) einen ersten Hauptträger (111) und eine erste Gabel (112) umfasst, die am ersten Hauptträger (111) angelenkt ist; und die ersten Räder (20) mit der ersten Gabel (112) verbunden sind;
wobei der zweite Rahmenkörper (12) einen zweiten Hauptträger (121) und eine zweite Gabel (122) umfasst, die miteinander verbunden sind, wobei das zweite Rad (30) mit der zweiten Gabel (122) verbunden ist; und
wobei der Klappmechanismus (70) den ersten Hauptträger (111) mit dem zweiten Hauptträger (121) verbindet.

11. Dreirad nach Anspruch 10, wobei der Klappmechanismus (70) Folgendes umfasst:
ein erstes Gelenk (71), das mit dem ersten Hauptträger (111) verbunden ist;
ein zweites Gelenk (72), das am ersten Gelenk (71) angelenkt ist und mit dem zweiten Hauptträger (121) verbunden ist; und
einen Handschaft (73), der am ersten Gelenk (71) oder dem zweiten Gelenk (72) angelenkt ist.

12. Dreirad nach Anspruch 10, wobei, wenn sich das Dreirad in einem eingeklappten Zustand befindet, eine Erstreckungsrichtung des zweiten Hauptträgers (121) im Wesentlichen parallel zu Erstreckungsrichtungen von Achsen der ersten Räder (20) ist.

13. Dreirad nach Anspruch 10, wobei der erste Rahmenkörper (11) weiter Folgendes umfasst:
ein erstes Rohr (113), das mit dem ersten Hauptträger (111) verbunden ist; und
ein schräges Rohr (114), das schräg zwischen dem ersten Hauptträger (111) und dem ersten Rohr (113) abgestützt ist.

14. Dreirad nach Anspruch 10, wobei der zweite Rahmenkörper (12) weiter ein zweites Rohr (123) umfasst, das mit dem zweiten Hauptträger (121) verbunden ist; und
das Dreirad (100) weiter ein Motorsystem (120) umfasst, das in einem Montageraum montiert ist, der durch das zweite Rohr (123) und den zweiten Hauptträger (121) gebildet wird.

## Revendications

1. Tricycle, comprenant :
un cadre (10) comprenant un premier corps (11) de cadre et un deuxième corps (12) de cadre reliés l'un à l'autre ;
un élément de pliage (70) reliant le premier corps (11) de cadre au deuxième corps (12) de cadre, le premier corps (11) de cadre et le deuxième corps (12) de cadre étant aptes à être pliés ou dépliés par l'élément de pliage (70) ;
deux premières roues (20) disposées sur le premier corps (11) de cadre ;
une deuxième roue (30) disposée sur le deuxième corps (12) de cadre ; et
un ensemble (80) roue universelle disposé sur le cadre (10) et mobile par rapport au cadre pour commuter entre une première position et une deuxième position, l'ensemble (80) roue universelle comprenant une roue universelle (81),
dans lequel, lorsque l'ensemble (80) roue universelle est dans la première position, les deux premières roues (20) et la deuxième roue (30) forment un premier plan de support pour supporter le tricycle ;
lorsque l'ensemble (80) roue universelle est dans la deuxième position, les deux premières roues (20) et la roue universelle (81) forment un deuxième plan de support pour supporter le tricycle ;
**caractérisé en ce que** le tricycle comprend en outre un arbre (90) de goupille relié au deuxième corps (12) de cadre ;
dans lequel l'ensemble (80) roue universelle est articulé sur le deuxième corps (12) de cadre par l'intermédiaire de l'arbre (90) de goupille ;
dans lequel l'ensemble (80) roue universelle comprend en outre un arbre de liaison (82), un manchon (83) d'arbre et un élément élastique (84), et dans lequel une extrémité de l'arbre de liaison (82) est reliée à l'arbre (90) de goupille, et un étrier de la roue universelle (81) est disposé de manière rotative sur l'autre extrémité de l'arbre de liaison (82) ; et
dans lequel une saillie limite (821) est disposée sur une surface externe de l'arbre de liaison (82), et fait saillie depuis celle-ci ; l'élément élastique (84) et le manchon (83) d'arbre sont emmanchés sur un extérieur de l'arbre de liaison (82) ; l'élément élastique (84) est comprimé entre le manchon (83) d'arbre et la saillie limite (821) ;
lorsque l'ensemble (80) roue universelle est dans la première position et la deuxième position, le manchon (83) d'arbre vient en butée contre le deuxième corps (12) de cadre pour jouer un rôle de limitation de position.

2. Tricycle selon la revendication 1, dans lequel le premier corps (11) de cadre comprend une première barre principale (111) et une première fourche (112) articulée sur la première barre principale (111) ; et les premières roues (20) sont reliées à la première fourche (112) ;
dans lequel le tricycle comprend en outre un attelage (40) monté sur la première fourche (112) ;
dans lequel le deuxième corps (12) de cadre comprend une deuxième barre principale (121) et une deuxième fourche (122) reliées l'une à l'autre, la deuxième roue (30) est reliée à la deuxième fourche (122) ; et
dans lequel l'élément de pliage (70) relie la première barre principale (111) à la deuxième barre principale (121).

3. Tricycle selon la revendication 2, dans lequel le premier corps (11) de cadre inclut en outre un premier tube (113) relié à la première barre principale (111) ; et
le tricycle comprend en outre une poignée (50) disposée de manière rotative sur le premier tube (113).

4. Tricycle selon la revendication 3, comprenant en outre un mécanisme (110) de libération rapide relié au premier tube (113) et apte à commuter entre un premier état et un deuxième état par rapport au premier tube (113) ;
lorsque le mécanisme (110) de libération rapide est dans le premier état, le mécanisme (110) de libération rapide permet à la poignée (50) de se déplacer par rapport au premier tube (113) ; et
lorsque le mécanisme (110) de libération rapide est dans le deuxième état, le mécanisme (110) de libération rapide restreint le mouvement de la poignée (50) par rapport au premier tube (113).

5. Tricycle selon la revendication 2, dans lequel le deuxième corps (12) de cadre comprend en outre :
un deuxième tube (123) relié à la deuxième barre principale (121) et à la deuxième fourche (122) ;
un tube de liaison (124) relié à la deuxième barre principale (121) et au deuxième tube (123) ; et
une portion de liaison (125) reliée au tube de liaison (124) ;
dans lequel l'ensemble (80) roue universelle est articulé sur la portion de liaison (125) ; et dans lequel le tricycle comprend en outre un siège (60) monté sur le deuxième tube (123).

6. Tricycle selon la revendication 2, dans lequel, lorsque le tricycle est dans un état plié, un angle aigu est formé entre la première barre principale (111) et la deuxième barre principale (121), et une direction d'extension de la première barre principale (111) est inclinée par rapport aux directions d'extension d'axes des premières roues (20).

7. Tricycle selon la revendication 1, comprenant en outre un attelage (40) monté sur le premier corps (11) de cadre ;
dans lequel, lorsque le tricycle est dans un état déplié, un point le plus bas de l'attelage (40) est inférieur à un centre d'essieu de la première roue (20).

8. Tricycle selon la revendication 1, comprenant en outre un attelage (40) monté sur le premier corps (11) de cadre ;
dans lequel l'attelage (40) est relié de manière amovible au premier corps (11) de cadre, lorsque le tricycle est dans un état plié, les autres composants restants du tricycle sont aptes à être logés dans l'attelage (40).

9. Tricycle selon la revendication 1, dans lequel le deuxième corps (12) de cadre est muni d'une première surface de limitation (1251) et d'une deuxième surface de limitation (1252) ;
lorsque l'ensemble (80) roue universelle est dans la première position, une surface d'extrémité du manchon (83) d'arbre éloignée de l'élément élastique (84) vient en butée contre la première surface de limitation (1251), pour limiter une commutation de l'ensemble (80) roue universelle de la première position à la deuxième position ; et
lorsque l'ensemble (80) roue universelle est dans la deuxième position, la surface d'extrémité du manchon (83) d'arbre éloignée de l'élément élastique (84) vient en butée contre la deuxième surface de limitation (1252), pour limiter une commutation de l'ensemble (80) roue universelle de la deuxième position à la première position.

10. Tricycle selon la revendication 1, dans lequel le premier corps (11) de cadre comprend une première barre principale (111) et une première fourche (112) articulée sur la première barre principale (111) ; et les premières roues (20) sont reliées à la première fourche (112) ;
dans lequel le deuxième corps (12) de cadre comprend une deuxième barre principale (121) et une deuxième fourche (122) reliées l'une à l'autre, la deuxième roue (30) est reliée à la deuxième fourche (122) ; et
dans lequel l'élément de pliage (70) relie la première barre principale (111) à la deuxième barre principale (121).

11. Tricycle selon la revendication 10, dans lequel l'élément de pliage (70) comprend :
un premier joint (71) relié à la première barre principale (111) ;
un deuxième joint (72) articulé sur le premier joint (71) et relié à la deuxième barre principale (121) ; et
une tige (73) de poignée articulée sur le premier joint (71) ou le deuxième joint (72).

12. Tricycle selon la revendication 10, dans lequel, lorsque le tricycle est dans un état plié, une direction d'extension de la deuxième barre principale (121) est sensiblement parallèle à des directions d'extension d'axes des premières roues (20).

13. Tricycle selon la revendication 10, dans lequel le premier corps (11) de cadre comprend en outre :
un premier tube (113) relié à la première barre principale (111) ; et
un tube oblique (114) supporté de manière oblique entre la première barre principale (111) et le premier tube (113).

14. Tricycle selon la revendication 10, dans lequel le deuxième corps (12) de cadre comprend en outre un deuxième tube (123) relié à la deuxième barre principale (121) ; et
le tricycle (100) comprend en outre un système de moteur (120) monté dans un espace de montage formé par le deuxième tube (123) et la deuxième barre principale (121).
